# EUROPEAN PATENT APPLICATION

(11) **EP 1 655 212 A1**
(43) Date of publication of application: **10.05.2006**
(21) Application number: 04425829.1
(22) Date of filing: 08.11.2004
(51) Int. Cl.: B62D 53/12

(54) **A device for coupling a trailer to a tractor**

(71) Applicant: ONE CONTACT S.R.L, 25020 FLERO (BRESCIA) (IT)
(72) Inventor: Mascialino, Claudio, 25080 Molinetto di Mazzano (Brescia) (IT)
(74) Representative: Tansini, Elio Fabrizio

(57) **Abstract**

A device for coupling a trailer with a tractor comprises a fifth wheel (2) to be mounted on a tractor (200) and carrying a coupling seat (8) to be linked to a kingpin (10) rigidly fixed to a trailer (100). The device further comprises a connecting mechanism (11) carrying a junction block (12) to be brought operatively in engagement with the kingpin (10), for connection of service lines (L₁, L₂) extending between the tractor (200) and trailer (100) through the kingpin (10). The connecting mechanism (11) is installed on the fifth wheel (2) and is supported by the fifth wheel (2) itself.

## Description

The present invention relates to a device for coupling a trailer with a tractor, of the type comprising the features set out in the preamble of claim 1.

It is known that an articulated lorry comprises one tractor and one semitrailer. The semitrailer is coupled with the tractor through a device comprising an articulation pin, known in the particular field as "kingpin", which is rigidly fixed to the semitrailer. The kingpin engages in a seat formed in a fifth wheel mounted on the tractor and is retained in its seat by means of a mechanical coupling system. The kingpin is free to rotate in the seat around a vertical axis to enable articulation of the semitrailer. Usually the fifth wheel is rotatably mounted on the tractor around a horizontal axis perpendicular to the running direction of the vehicle or is supported by elastic pads, to compensate for inclinations of the tractor relative to the semitrailer due to undulations of the road. However a clearance is always present between the kingpin and the fifth wheel seat, in order to enable relative displacements of same both in a vertical direction, along the geometric axis of the pin itself, and horizontally along directions radial to the geometric axis. In addition said clearance enables inclination of the pin relative to the fifth wheel seat.

Devices for coupling between the trailer and the tractor are known, in which the kingpin also performs the function of connecting the service lines, of the electric, pneumatic or hydraulic type for example, of the tractor to those of the semitrailer. To this aim, a junction block for engagement with the pin is mounted on the tractor. Said junction block is provided with terminals that are connected, by means of flexible cables, to the service lines of the tractor. The terminals of the junction block, once the latter is coupled with the pin, are engaged in respective terminals carried by the pin itself and connected to the service lines of the semitrailer.

To ensure continuity of the electric, hydraulic and/or pneumatic connections between the junction block and the kingpin, in the International Patent Application No. WO2003/078238 in the name of the same Applicant it is proposed a connecting device in which the kingpin is rigidly fastened to the trailer, whereas the junction block associated with the fifth wheel is rotatably supported by an annular element mounted under the fifth wheel and rigidly fixed to the tractor. The mobility of the junction block should enable the relative movements of the kingpin with respect to the fifth wheel and to the tractor to be followed, so that the sealing elements interposed between the junction block and the kingpin are not subjected to early wear. Actually, the technical solution proposed in the mentioned prior art supplies the junction block with a degree of freedom that is only sufficient to favour the movement of the pin around the rotation axis of the annular element.

Disadvantageously, all the remaining above mentioned movements of the pin are hindered by the constraint with the annular element. The movement of the semitrailer relative to the tractor, due to the road surface undulations and disconnections, can therefore cause detachment of the pin from the junction block or breaking of parts of the fifth wheel-kingpin assembly, which will entail loss of control of the vehicle.

In addition, in known solutions the junction block mounted on the tractor and under the fifth wheel, and the devices designed for movement of same to carry out engagement and disengagement from the kingpin, take up room in regions of the tractor that are usually dedicated to the housing of cables, pipelines belonging to the service lines and/or other devices or apparatus disposed on the tractor. Due to the bulkiness of this element therefore, a correct positioning of the cables and pipes is prevented and assembling of the parts relating to the tractor platform is made more difficult.

The Applicant has found that the devices of the above described type could be improved under different points of view, in particular in terms of reliability and safety offered by the articulated lorry.

Accordingly, it is an aim of the present invention to propose a device for coupling a trailer with a tractor enabling automatic fitting and disconnection of the service lines while at the same time ensuring a high reliability of the assembly.

The above aim and still others that will become more apparent during the following description, are achieved by a device for coupling a trailer with a tractor comprising the features set out in claim 1 and in the claims depending thereon.

Further features and advantages will be better understood from the detailed description of a preferred but not exclusive embodiment of a device for coupling a trailer with a tractor in accordance with the present invention.

This description will be set out hereinafter with reference to the accompanying drawings given by way of non-limiting example, in which:
- Fig. 1 shows an articulated lorry provided with a device for coupling the trailer with the tractor in accordance with the present invention;
- Fig. 2 is a side view of the device of the invention in a first operating position, shown in solid line, and in a second operating position, shown in chain line;
- Fig. 3 shows the device in Fig. 2 in the first operating position and partly sectioned;
- Fig. 4 shows the device in Fig. 2 in the second operating position and partly sectioned;
- Fig. 5 is a top view partly in section of the device in Fig. 2 in a first configuration, represented in solid line, and in a second configuration, represented in chain line.

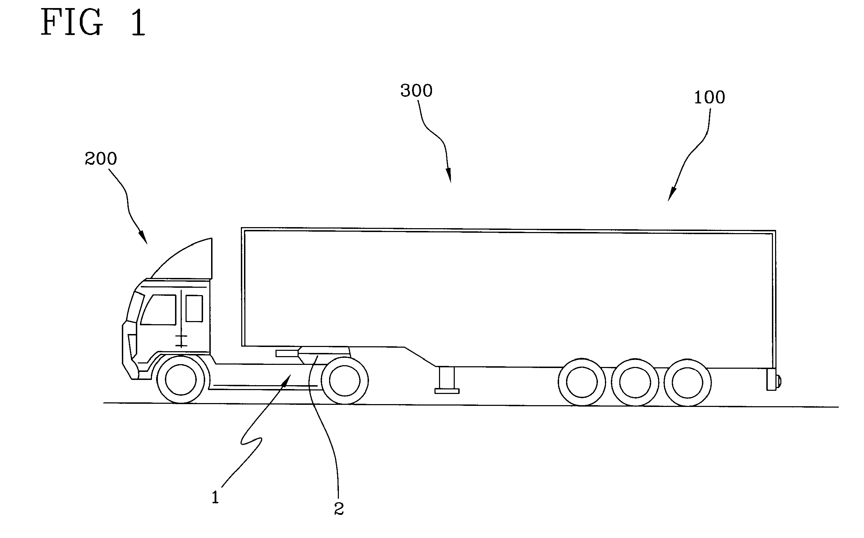

With reference to the drawings, a device for coupling a trailer 100 with a tractor 200 of an articulated lorry 300 in accordance with the present invention (Fig. 1) has been generally identified with reference numeral 1.

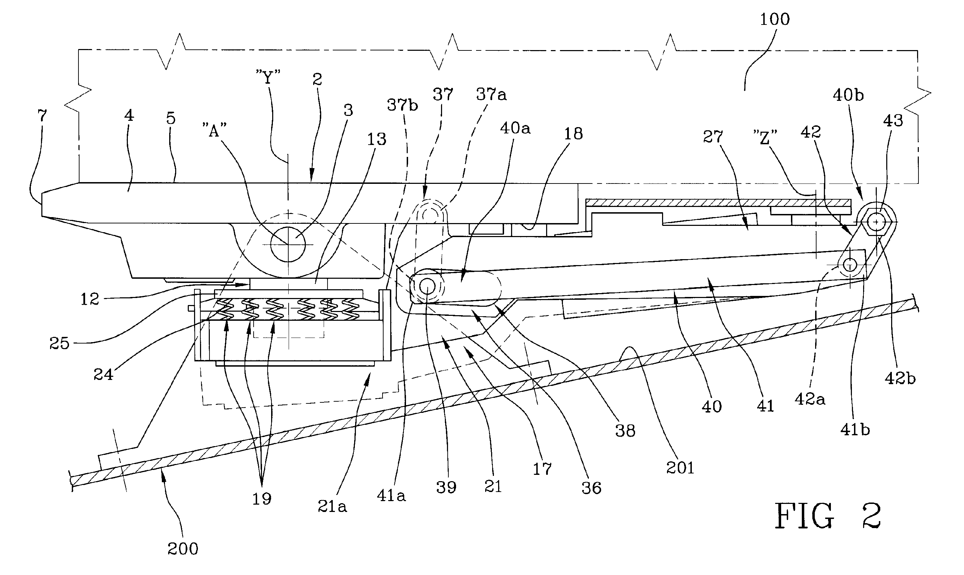

The device 1 comprises a fifth wheel 2 that is mounted in known manner on a tractor 200. Usually, the fifth wheel 2 is linked to the tractor 200 through an articulated joint 3 enabling rotation thereof around a horizontal axis "A" perpendicular to the running direction of tractor 200 (Fig. 2). Alternatively, the fifth wheel 2 is mounted on pads, known by themselves and therefore not shown. In both solutions the fifth wheel 2 is movable relative to tractor 200, to compensate for relative movements between the tractor 200 itself and trailer 100 due to road undulations and disconnections.

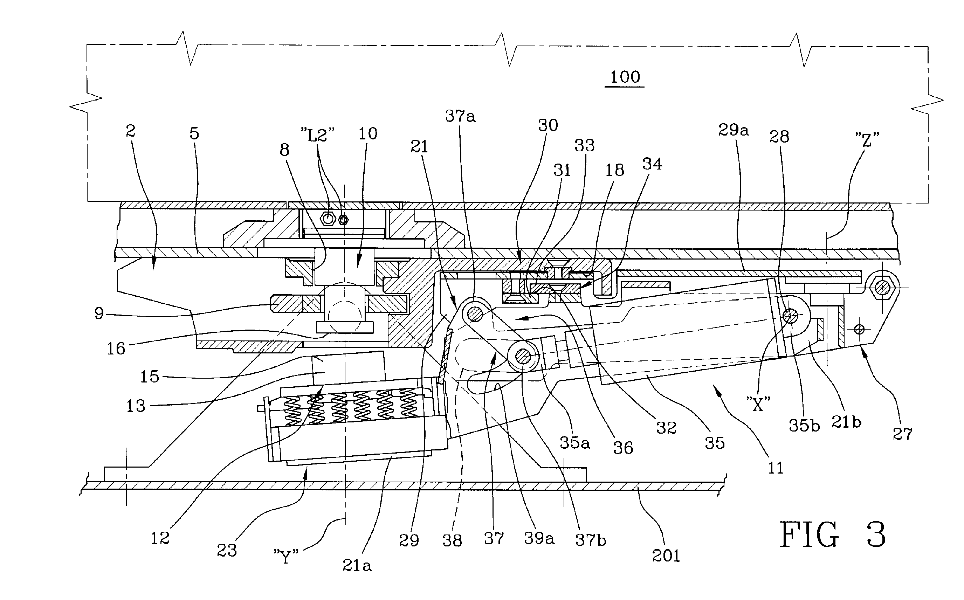

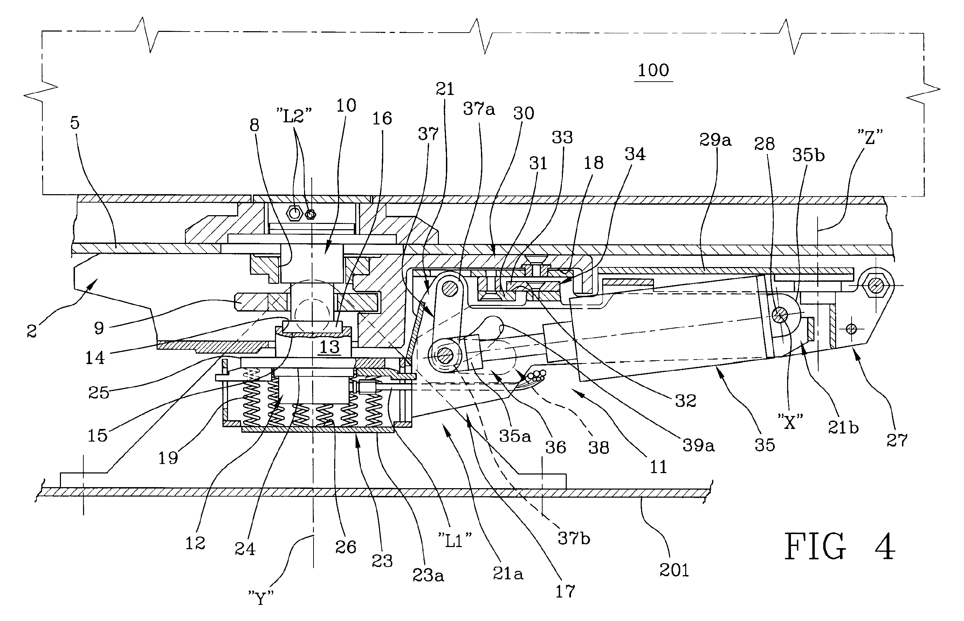

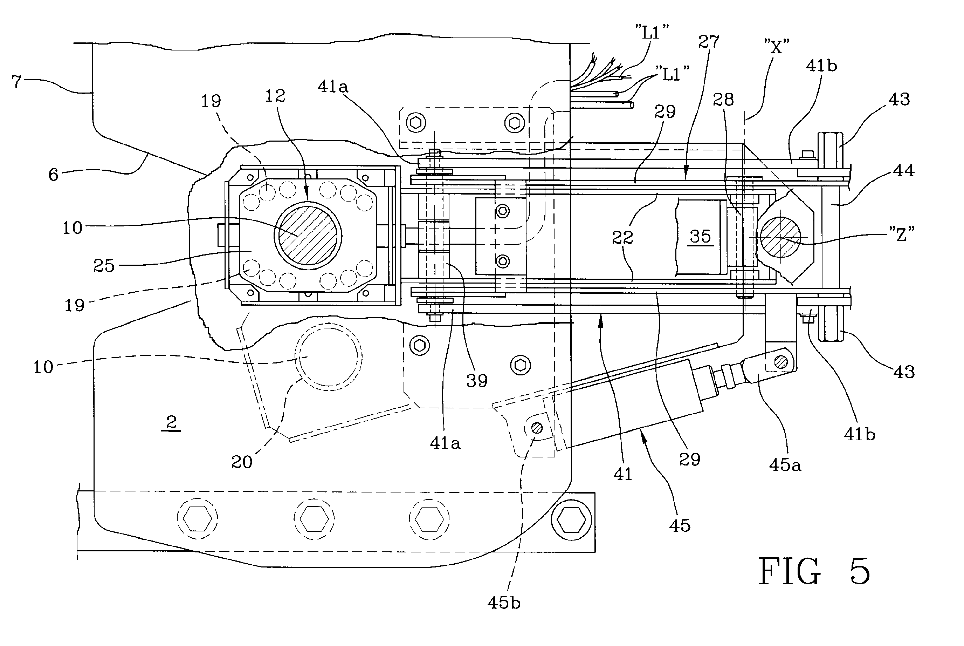

The fifth wheel 2, of a type known by itself, is made up of a plate 4 delimiting an upper support plane 5 for trailer 100 and is provided with a slit 6 formed in the edge 7 of the plate 4 (Fig. 5). Slit 6 extends as far as a central region of the fifth wheel 2 where it delimits a coupling seat 8 (Figs. 3 and 4). The coupling seat 8 can be linked, through a hook 9 known by itself and not further described, to an articulation pin 10 rigidly connected to trailer 100 and known in the specific technical field as "kingpin". Hook 9 allows a free rotation, within a predetermined angle, of the kingpin 10 in the fifth wheel 2, to enable articulation of trailer 100.

The device 1 further comprises a connecting mechanism 11 carrying a junction block 12 operatively associable with the kingpin 10 (Figs. 2, 3 and 4).

The junction block 12 is provided with terminals, not shown, connected to service lines "L₁" of tractor 200 and suitable for association with respective terminals of service lines "L₂" of trailer 100 located on the kingpin 10. The service lines extend between tractor 200 and trailer 100 through the kingpin 10. By way of example, the service lines can be electric lines to power light sources, pneumatic lines for the braking system, or hydraulic lines for movement of the jacks.

In the preferred embodiment shown in Figs. 3 and 4, the junction block 12 comprises a cylindrical body 13 provided with a circular cavity 14 formed at an upper base 15 thereof. Housed in the circular cavity 14 is a lower base 16 of the kingpin 10. The terminals of the service lines of tractor 200 appear on the upper base 15 of the junction block 12 and the terminals of the service lines of trailer 100 appear on the lower base 16 of the kingpin 10.

The upper base 15 of the junction block 12 and/or the lower base 16 of the kingpin 10 are further provided with gaskets not shown, ensuring sealing of the pneumatic or hydraulic lines even in case of sliding due to relative rotations between the kingpin 10 and junction base 12 around the longitudinal axis.

Advantageously and unlike the devices of the known art, the connecting mechanism 11 is installed on the fifth wheel 2 and is supported by said fifth wheel 2. In more detail, the connecting mechanism 11 comprises a support member 17 carrying the junction block 12 and is connected to the fifth wheel 2 at a lower surface 18 of the fifth wheel 2 itself facing the platform 201 of tractor 200 (Figs. 2, 3 and 4).

In addition, the junction block 12 is elastically coupled with the fifth wheel 2 preferably through elastic-coupling means 19 interposed between the junction block 12 and the support member 17, to compensate for relative movements between the kingpin 10 and fifth wheel 2.

To enable engagement of the junction block 12 with the kingpin 10 and disengagement of the junction block 12 from said kingpin 10, the connecting mechanism 11 is movable relative to the fifth wheel 2 between a first operating position at which the junction block 12 is lying spaced apart from the fifth wheel 2 (Fig. 3) and a second operating position at which the junction block 12 is disposed close to the fifth wheel 2 (Fig. 4). To this aim, the connecting mechanism 11 is rotatable relative to the fifth wheel 2 around a first axis "X" that is substantially parallel to the support plane 5 for movement between the first and second operating positions (Figs. 3 and 4).

When the junction base 12 is in the second position, rigidly connected with the kingpin 10, the connecting mechanism 11 is movable together with the fifth wheel 2 relative to tractor 200.

Referring particularly to Fig. 5, the connecting mechanism 11 is further preferably movable relative to the fifth wheel 2 between an operating configuration represented in solid line, at which the junction block 12 is in alignment with the coupling seat 8 for engagement with the kingpin 12, and a rest configuration represented in chain line, at which the junction block 12 is out of alignment with the coupling seat 8 for engagement with a protection element 20 only diagrammatically shown in Fig. 5, carried by the fifth wheel 2 and of a shape corresponding to that of the end of the kingpin 10. To this aim, the connecting mechanism 11 is rotatable relative to the fifth wheel 2 around a second axis "Z" substantially perpendicular to the support plane 5 for movement between an operating configuration shown in solid line, and the rest configuration shown in chain line. Displacement to the rest configuration is carried out while the junction block 12 lies spaced apart from the fifth wheel 2. Once out of alignment with the coupling seat 8 and in alignment with the protection element 20, the junction block 12 is moved close to the fifth wheel 2 for engagement with the protection element 20.

In more detail in terms of construction, the support member 17 comprises an arm 21 having a first end 21a connected to the junction block 12 and a second end 21b rotatably coupled with the fifth wheel 2 around the first axis "X". The arm 21 is defined by a pair of mutually spaced apart and parallel walls 22, shown in Fig. 5, that are fastened at the first end 21a of arm 21, to a cup-shaped structure 23 on which the junction block 12 is installed.

The junction block 12 has an abutment surface 24 belonging to an annular ridge 25 extending from the cylindrical body 13.

The abutment surface 24 is parallel to the support plane 5 of the fifth wheel 2 and faces an abutment surface 26 of the support member 17. As shown in Fig. 2, the abutment surface 26 of the support member 17 is defined by the base 23a of the cup-shaped structure 23.

The elastic-coupling means 19 is interposed between the abutment surfaces 24, 26 of the junction block 12 and the support member 17 respectively, so as to bear the weight of the junction block 12 while at the same time ensuring locking of the connecting mechanism 11 to the second operating position, as specified in the following, and absorption of the loads transmitted by trailer 100 through the kingpin 10.

Advantageously, the elastic-coupling means 19 comprises a plurality of springs disposed around a longitudinal axis "Y" of the junction block 12. In the preferred embodiment herein shown, the device 1 comprises a plurality of helical springs, each having an end coupled with the annular abutment surface 24 of the junction block 12 and the opposite end bearing against the abutment surface 26 of the cup-shaped structure 23.

An auxiliary element 27 is interposed between the arm 21 and fifth wheel 2 and carries a stem 28 coaxial with the first axis "X", around which the second end 21b of the arm 21 is rotatably fastened. The auxiliary element 27 has a box-shaped structure and comprises an upper wall 29a (Figs. 3 and 4) and a pair of side walls 29 mutually spaced apart and parallel, within which the walls 22 of arm 21 are positioned (Fig. 5). The auxiliary element 27 is hinged on the fifth wheel 2 around the second axis "Z" substantially perpendicular to the support plane 5 of trailer 100 to move the connecting mechanism 11 between the operating configuration shown in solid line in Fig. 5 and the rest configuration shown in chain line in Fig. 5.

The auxiliary element 27 is further fastened to the fifth wheel 2 at a guide 30 located, with reference to Figs. 3 and 4, between the second axis "Z" and the coupling seat 8. The guide 30 comprises a lug 31 extending from the lower surface 18 of the fifth wheel 2. The lug 31 carries a support surface 32 preferably describing an arc of a circle concentric with the second axis "Z" and is parallel to the upper support plane 5. In engagement with the support surface 32 is the end 33 of a lug 34 rigidly connected to the arm 21. During rotation of the auxiliary element 27 and arm 21 around the second axis "Z", the end 33 of the lug 34 slides on the support surface 32.

To move the arm 21 between the first and second operating positions, the connecting mechanism 11 comprises a linear actuator 35 preferably defined by a pneumatic or hydraulic cylinder having a first end 35a connected to arm 21 and a second end 35b connected to the auxiliary element 27. Preferably, the second end 35b of the linear actuator 35 is rotatably coupled with the auxiliary element 27 to rotate about the same first axis "X" around which arm 21 rotates. In the embodiment herein represented, the linear actuator 35 is positioned between the walls 22 of arm 21 and is passed through by the stem 28 (Fig. 5).

The connecting mechanism 11 further comprises a kinematic mechanism 36 interposed between the first end 35a of actuator 35, arm 21 and the auxiliary element 27.

Preferably, this kinematic mechanism 36 during passage of the connecting mechanism 11 from the first to the second operating positions, gives rise to a first step of compressing the elastic-coupling means 19 followed by a second step of partly extending the elastic-coupling means 19 which corresponds to a situation of stable equilibrium of the second operating position. During the first step, by effect of the kinematic mechanism 36, the elastic-coupling means 19 resists the thrust exerted by the linear actuator 35 until a point of unstable equilibrium is reached. Beyond the point of unstable equilibrium, the thrust of actuator 35 is favoured by the extension of the elastic-coupling means 19.

To obtain the above described operation, the kinematic mechanism 36 comprises a first guide element 37 interposed between the arm 21 and the first end 35a of actuator 35 kinematically defining a sliding block capable of giving two degrees alone of freedom to actuator 35 relative to arm 21 or vice versa. The kinematic mechanism 36 further comprises a second guide element 38 interposed between the auxiliary element 27 and the first end 35a of actuator 35, which too defines a sliding block capable of giving two degrees alone of freedom to actuator 35 relative to the auxiliary element 27 or vice versa.

Displacement of the first end 35a of actuator 35 connected both to arm 21 and to the auxiliary element 27, causes motion of arm 21 relative to the auxiliary element 27 between the two operating positions. In more detail, extending of the linear actuator 35 moves arm 21 from the second to the first operating positions.

In the embodiment shown, the first guide element 37 is a link having a first end 37a hinged on arm 21 and a second end 37b hinged on the first end 35a of actuator 35. The second guide element 38 is defined by a slot formed in one of the side walls 29 of the auxiliary element 27. Slidably guided within slot 38 is a pin 39 carried by the first end 35a of actuator 35.

The link 37 is installed between the walls 22 of arm 21 and therefore the pin 39 for carrying out engagement into slot 38 passes through the walls of arm 21 at openings 39a formed in the arm 21 itself and shown in Figs. 3 and 4.

Alternatively, according to an alternative embodiment not shown, the second guide element 38 can be defined by a link having a first end hinged on the auxiliary element and a second end hinged on the first end 35a of actuator 35, while the first guide element 37 is defined by a slot formed in one of the walls 22 of arm 21, with the pin 39 slidably guided in said slot. The guide elements 37, 38 can also be defined both by links or both by slots.

Irrespective of the specific solution herein adopted for the kinematic mechanism 36, it is important that at least one of the two guide elements 37, 38 should cause the first end 35a of actuator 35 to cover a curved trajectory relative to arm 21 or to the auxiliary element 27, so as to bring the arm 21 to a point at which it maximally approaches the fifth wheel 2, which corresponds to the point of unstable equilibrium, before the complete extension of actuator 35.

If the curved trajectory is marked out by the first end 35a of actuator 35 relative to arm 21, through the first guide element 37, it must have its concavity facing the fifth wheel 2. To this aim, the first end 37a of link 37 shown in Figs. 2 and 3 is hinged on arm 21 over the slot 38. If the curved trajectory is marked out by the first end 35a of actuator 35 relative to the auxiliary element 27, through the second guide element 38, it must have its convexity facing the fifth wheel 2. Therefore, the possible link used to perform the function of second guide element 38 must be hinged on the auxiliary element 27 at a lower position than the first guide element 37. If only slots are used, the slot in the auxiliary element 27 must have its concavity facing downwards and/or the slot formed in arm 21 must have its concavity facing upwards.

To enable engagement or disengagement of the junction block 12 also in the absence of power supply to the linear actuator 35, the connecting mechanism 11 further comprises a manual actuator 40 having a first end 40a connected to arm 21 and a second end 40b connected to the auxiliary element 27, to manually move the connecting mechanism 11 between the first and second operating positions.

Preferably, the manual actuator 40 is defined by at least one rod 41 having a first end 41a hinged on the first end 35a of the linear actuator 35 and is therefore connected both to arm 21 and to the auxiliary element 27. A first end 42a of a connecting-rod 42 is hinged on a second end 41b of the rod 41 and a second end 42b of the same connecting-rod 42 is hinged on the auxiliary element 27. At its second end 42b, the connecting-rod 42 is provided with a seat 43 for engagement of a tool adapted to cause rotation of the connecting-rod 42 and manual operation of actuator 40, preferably by means of the same box wrench used for replacement of the wheels in the articulated lorry.

In the preferred embodiment herein illustrated, the manual actuator 40 is provided with a pair of connecting-rods 42 and rods 41 disposed on opposite sides of the arm 21 and the auxiliary element 27, to enable access to actuator 40 from both sides of tractor 200. A first shaft 44 passes through the side walls 29 of the auxiliary element 27 and connects the second ends 42b of the respective connecting-rods 42. The pin 39 of the linear actuator 35 connects the first ends 41a of the respective rods 41 passing through the walls of the arm 21 and the auxiliary element 27.

Finally, the connecting mechanism 11 comprises a second linear actuator 45 preferably of the hydraulic or pneumatic type, having a first end 45a hinged on the auxiliary element 27 and a second end 45b hinged on the fifth wheel 2, to move the connecting mechanism 11 around the second axis "Z" between the operating and rest configurations.

The present invention achieves the intended purposes and has important advantages.

First of all, the device in accordance with the present invention ensures continuity of the service lines of the articulated lorry also when running on undulated, disconnected or tortuous paths. In addition, mounting of the junction block on the fifth wheel as claimed enables generation of stresses in the mechanism to be avoided, which stresses could lead to breaking of the mechanism itself.

In fact, mounting of the mechanism on the fifth wheel enables the junction block to follow the rocking movements of the fifth wheel. The elastic mounting of the junction block on the connecting mechanism enables the junction block to follow the movements resulting from the clearance between the kingpin and fifth wheel without jeopardising the correct connection of the electric and pneumatic lines. These movements are not hindered by any mechanical constraint between the junction block and tractor.

It is to be pointed out that most of the operating life of the vehicle takes place on fast flowing roads with wide-radius bends only causing small rotations of the kingpin in the fifth wheel. Under this situation, the twisting possibility of the elastic-coupling means around the longitudinal axis of the junction block enables the latter to follow the small rotations of the kingpin in an integral manner. Only during manoeuvring for parking or when there are bends of reduced radius causing important rotations of the trailer relative to the fifth wheel, the kingpin rotation involves rubbing on the junction block. In any case, since these operations only concern a minimum part of the operating life of the vehicle, when rubbing occurs it does not involve too much wear of the seals mounted between the kingpin and junction block.

In addition, due to the particular kinematic mechanism adopted, an accidental uncoupling of the junction block from the kingpin is made impossible, even in case of damages to the systems designed for pneumatic feeding to the linear actuator, which greatly increases the driver's and the other road users' safety. Even in case of damage, due to the possibility of manually driving the connecting mechanism of the junction base, the user can in case of need carry out the coupling and uncoupling operations between the tractor and trailer.

Safety is also ensured by the presence of the plurality of springs pushing the junction block against the kingpin. In fact, breaking of a spring does not impair the device operation, because the load supported by said spring before breaking is redistributed on the remaining springs. Breaking of one or some springs 19 can at worst cause slight fluid leaks from the pneumatic feeding lines that do not impair the operating pressure and can be easily detected by means of suitable sensors and signalled, to enable timely interventions for repair.

The device of the invention is compact and does not take up room in regions of the tractor that are usually dedicated to passage of the pneumatic and hydraulic pipelines and the electric cables.

Finally, when the trailer is not coupled with the tractor, the device of the invention enables protection of the junction block against dirt, grease and atmospheric agents, as said junction block is brought under the fifth wheel.

## Claims

1. A device for coupling a trailer with a tractor, comprising:
- a fifth wheel (2) to be mounted on a tractor (200) and carrying a coupling seat (8) to be linked to a kingpin (10) rigidly fixed to a trailer (100);
- a connecting mechanism (11) carrying a junction block (12) to be brought operatively in engagement with the kingpin (10) for connection of service lines (L₁, L₂) extending between the tractor (200) and the trailer (100) through said kingpin (10);
**characterised in that** the connecting mechanism (11) is installed on the fifth wheel (2) and supported by said fifth wheel (2).

2. A device as claimed in claim 1, wherein the fifth wheel (2) is movable relative to the tractor (200), to compensate for relative movements between the tractor (200) and trailer (100), and the connecting mechanism (11) is movable together with the fifth wheel (2) relative to said tractor (200).

3. A device as claimed in claim 1, wherein the junction block (12) is elastically coupled with the fifth wheel (2) to compensate for relative movements between the kingpin (10) and the fifth wheel (2).

4. A device as claimed in claim 1, wherein the connecting mechanism (11) is movable relative to the fifth wheel (2) between a first operating position at which the junction block (12) lies spaced apart from the fifth wheel (2) and a second operating position at which the junction block (12) is disposed close to said fifth wheel (2) to engage the kingpin (10).

5. A device as claimed in claim 4, wherein the connecting mechanism (11) is rotatable relative to the fifth wheel (2) around a first axis (X) substantially parallel to a support plane (5) for the trailer (100) delimited by the fifth wheel (2), for movement between the first and second operating positions.

6. A device as claimed in claim 1, wherein the connecting mechanism (11) is further movable relative to the fifth wheel (2) between an operating configuration at which the junction block (12) is in alignment with the coupling seat (8) for engagement with the kingpin (10), and a rest configuration at which the junction block (12) is out of alignment with the coupling seat (8) for engagement with a protection element (20).

7. A device as claimed in claim 6, wherein the connecting mechanism (11) is rotatable relative to the fifth wheel (2) around a second axis (Z) substantially perpendicular to a support plane (5) for the trailer (100) delimited by the fifth wheel for movement between the operating and rest configurations.

8. A device as claimed in claims 1, 4 or 6, wherein the connecting mechanism (11) further comprises a support member (17) carrying the junction block (12) which is connected with the fifth wheel (2), and elastic-coupling means (19) is interposed between the junction block (12) and the support member (17) to compensate for relative movements between the kingpin (10) and fifth wheel (2).

9. A device as claimed in claim 8, wherein the elastic-coupling means (19) supports the weight of the junction block (12).

10. A device as claimed in claim 8, wherein the junction block (12) has an abutment surface (24) parallel to a support plane (5) for the trailer (100) delimited by the fifth wheel (2), the support member (17) having an abutment surface (26) facing the abutment surface (24) of the junction block (12), and the elastic-coupling means (19) being interposed between said abutment surfaces (24, 26).

11. A device as claimed in claim 8, wherein the elastic-coupling means (19) comprises a plurality of springs.

12. A device as claimed in claim 11, wherein the springs (19) are disposed around a longitudinal axis (Y) of the junction block (12).

13. A device as claimed in claim 8, wherein the support member (17) comprises an arm (21) having a first end (21a) connected to the junction block (12) and a second end (21b) rotatably coupled with the fifth wheel (2) around a first axis (X) substantially parallel to a support plane (5) for the trailer (100) delimited by the fifth wheel (2).

14. A device as claimed in claim 13, wherein the support member (17) further comprises an auxiliary element (27) interposed between the arm (21) and fifth wheel (2); the auxiliary element (27) being hinged on the fifth wheel (2) around a second axis (Z) substantially perpendicular to the support plane (5); the second end (21b) of the arm (21) being rotatably installed on said auxiliary element (27).

15. A device as claimed in claim 14 when claim 8 depends on claim 4, wherein the connecting mechanism (11) further comprises a linear actuator (35) having a first end (35a) connected to the arm (21) and a second end (35b) connected to the auxiliary element (27) for movement of the connecting mechanism (11) between the first and second operating positions.

16. A device as claimed in claim 15, wherein the second end (35b) of the linear actuator (35) is rotatably coupled with the auxiliary element (27) for rotation about the first axis (X).

17. A device as claimed in claim 15, wherein the connecting mechanism (11) further comprises at least one kinematic mechanism (36) interposed between the first end (35a) of the actuator (35), the arm (21) and the auxiliary element (27), so as to give rise, during passage of said connecting mechanism (11) from the first to the second operating positions, to a first step of compressing the elastic-coupling means (19) followed by a second step of partially extending the elastic-coupling means (19) which corresponds to a situation of stable equilibrium of the second operating position.

18. A device as claimed in claim 17, wherein the kinematic mechanism (36) comprises a first guide element (37) interposed between the arm (21) and the first end (35a) of the actuator (35) and a second guide element (38) interposed between the auxiliary element (27) and the first end (35a) of the actuator (35), to move the arm relative to the auxiliary element (27) upon displacement of said first end (35a) of the actuator (35).

19. A device as claimed in claim 18, wherein the first guide element (37) is a link having a first end (37a) hinged on the arm (21) and a second end (37b) hinged on the first end (35a) of the actuator (35).

20. A device as claimed in claim 18, wherein the first guide element (37) is defined by a slot formed in a wall (22) of the arm (21); a pin (39) carried by the first end (35a) of the actuator (35) being slidably housed in the slot (38).

21. A device as claimed in claim 18, wherein the second guide element (38) is defined by a slot formed in a wall (29) of the auxiliary element (27); a pin (39) carried by the first end (35a) of the actuator (35) being slidably housed in the slot (38).

22. A device as claimed in claim 18, wherein the second guide element (38) is a link having a first end hinged on the auxiliary element (27) and a second end hinged on the first end (35a) of the actuator (35).

23. A device as claimed in claim 15, wherein the connecting mechanism (11) further comprises a manual actuator (40) having a first end (40a) connected to the arm (21) and a second end (40b) connected to the auxiliary element (27) to manually move the connecting mechanism (11) between the first and second operating positions.

24. A device as claimed in claim 23, wherein the manual actuator (40) is defined by a rod (41) having a first end (41a) hinged on the first end (35a) of the linear actuator (35) and by a connecting-rod (42) having a first end (42a) hinged on a second end (41b) of the rod (41) and a second end (42b) hinged on the auxiliary element (27); the connecting-rod (42) being provided with a seat (43) for engagement of a tool.

25. A device as claimed in claim 15 when claim 8 depends on claim 6, wherein the connecting mechanism (11) further comprises a second linear actuator (45) having a first end (45a) hinged on the auxiliary element (27) and a second end (45b) hinged on the fifth wheel (2) to move the connecting mechanism (11) between the operating configuration and rest configuration.

26. A motor-vehicle **characterised in that** it comprises a device (1) for coupling a trailer with a tractor as claimed in one or more of claims 1 to 25.
